# EUROPÄISCHE PATENTANMELDUNG

(11) **EP 1 829 988 A1**
(43) Veröffentlichungstag der Anmeldung: **05.09.2007**
(21) Anmeldenummer: 06004229.8
(22) Anmeldetag: 02.03.2006
(51) Int. Cl.: C23C 24/04, F01D 5/28, B23P 6/00

(54) **Verfahren zur Reparatur und wiederherstellung von dynamisch beanspruchten Komponenten aus Aluminiumlegierungen für luftfahrtechnische Anwendungen**

(71) Anmelder: Praxair Surface Technologies GmbH, 40880 Ratingen (DE); Röder Präzision GmbH, 63329 Egelsbach (DE)
(72) Erfinder: STOLTENHOFF, Thorsten, 58256 Ennepetal (DE); BURGER, Hans,, 64390 Erzhausen (DE); ZIMMERMANN, Folker,, 55597 Wöllstein (DE); GORRIS, Klaus,, 46236 Bottrop (DE)
(74) Vertreter: Schwan - Schwan - Schorer

(57) **Zusammenfassung**

Die vorliegende Erfindung betrifft ein Verfahren zur Reparatur und Wiederherstellung von dynamisch beanspruchten Komponenten aus Aluminiumlegierungen für luftfahrtechnische Anwendungen, bei welchem
(a) der Grundwerkstoff ermittelt wird, aus dem die zu reparierende Komponente gefertigt wurde,
(b) die zu reparierende Komponente, falls erforderlich, einer Vorbearbeitung unterzogen wird,
(c) ein Spritzwerkstoff ausgewählt wird, der vergleichbare chemische, physikalische und mechanische Eigenschaften wie der Grundwerkstoff hat,
(d) für das anschließende Beschichtungsverfahren Beschichtungsparameter derart gewählt werden, das die Bindung innerhalb der aufzubringenden Schicht optimiert wird,
(e) der Spritzwerkstoff mittels Kaltgasspritzen auf die zu reparierende Komponente aufgebracht wird, um infolge Verschleiß und Vorbearbeitung abgetragenes Material zu ersetzen, und
(f) die beschichtete Komponente derart nachbearbeitet wird, dass die ursprüngliche Bauteilgeometrie wiederhergestellt wird,

Mit diesem Verfahren lassen sich Komponenten für den Einsatz im Luftfahrzeug wiederherstellen, ohne dass hierfür zusätzliche Verfahrensschritte, insbesondere thermische Verfahrensschritte wie etwa Sintern, erforderlich wären.

## Beschreibung

Die Erfindung betrifft ein Verfahren zur Reparatur und Wiederherstellung von dynamisch beanspruchten Komponenten aus Aluminiumlegierungen für luftfahrtechnische Anwendungen.

Komponenten, die im Bereich der Luft- und Raumfahrttechnik zum Einsatz kommen, unterliegen stets der Forderung nach Gewichtsoptimierung, gleichzeitig bestehen aufgrund der Belastungen im Flugbetrieb außerordentlich hohe Anforderungen an die Werkstoffe hinsichtlich mechanischer, physikalischer und chemischer Eigenschaften, um die Betriebssicherheit des Luftfahrzeugs zu gewährleisten. Diese zum Teil widersprüchlichen Forderungen spiegeln sich beispielsweise in sehr filigranen Strukturen und komplexen Formen aber auch der Werkstoffauswahl wieder, wodurch etwa ein besonders hohes Maß an Verwindungssteifigkeit, Schwingfestigkeit oder Korrosionsbeständigkeit erreicht werden soll, um nur einige zu nennen. Hochfeste Aluminiumlegierungen stellen daher eine der wichtigsten Werkstoffgruppen für die Luft- und Raumfahrt dar. Das besonders günstige Verhältnis von physikalischer Dichte zu Festigkeit - insbesondere bei schwingender Beanspruchung - in Verbindung mit der vergleichsweise geringen Empfindlichkeit gegenüber Temperaturwechselbeanspruchung prädestiniert diese Werkstoffe für den Einsatz im Bereich des Fahrwerks der Struktur und auch des Antriebs.

Der zunehmende technische Fortschritt in der Luft- und Raumfahrt und die daraus resultierenden wachsenden Anforderungen an Material und Bauteilstruktur vor dem Hintergrund ständig steigenden Kostendrucks machen die wirtschaftliche Instandsetzung der meist sehr teuren Komponenten heute unverzichtbar. Der Prozess der Instandsetzung wird jedoch durch die zuvor genannten Charakteristika luftfahrttechnischer Komponenten wie Komplexität, Werkstoffauswahl sowie die Auslegung im Grenzbereich erheblich erschwert, da neben den Anforderungen an die Formgenauigkeit beispielsweise auch nachteilige Einflüsse auf den Grundwerkstoff vermieden werden müssen. Bereits durch unsachgemäße Handhabung im Herstellungs-/Reparaturprozess können mechanische Beschädigungen auftreten, wobei übermäßige Wärmezufuhr im Bearbeitungsprozess in signifikanten Festigkeitseinbußen resultieren kann.

Komponenten, die im Bereich der Luft- und Raumfahrttechnik zum Einsatz kommen, wie z.B. Fahrwerkskomponenten und Propellerblätter, sind im Betrieb mitunter außerordentlich starken Beanspruchungen unterworfen.

So erfahren beispielsweise Fahrwerke von Luftfahrzeugen im Wesentlichen zwei Hauptbeanspruchungsarten, eine mechanische Komponente bei Start und Landung sowie ein fortwährend stattfindender Korrosionsangriff als Folge der Umgebungseinflüsse. Die mechanische Beanspruchung wiederum setzt sich zusammen aus der statischen Last allein aufgrund des Luftfahrzeuggewichts, kurzzeitiger Biegebeanspruchung beim Schleppen des Luftfahrzeugs, sowie starker dynamischer Belastung bei Start und Landung. Hinsichtlich der dynamischen Last bei Start und Landung ist es sinnvoll eine weitere Aufteilung zu treffen in Luftfahrzeuge, die eine Beschleunigungs-/Verzögerungsstrecke für den Start-/Landevorgang benötigen (herkömmliche Flugzeuge), sowie Luftfahrzeuge, die ohne Start-/Landebahn zunächst senkrecht vom Boden abheben bevor die Beschleunigung in Vortriebsrichtung erfolgt (Hubschrauber und Senkrechtstarter). Bei herkömmlichen Flugzeugen wirkt durch die notwendigen hohen Startgeschwindigkeiten in Verbindung mit vergleichsweise hohen Startgewichten eine extreme Belastung auf die Fahrwerke. Bei der Landung bewirkt die Verzögerung der Bremse zusätzlich eine Biegebeanspruchung. In beiden Betriebsarten werden Unebenheiten von Start- und Landebahn übertragen, die sich trotz Dämpfung durch Reifen und Federn auf die Fahrwerksstruktur auswirken und dort beispielsweise Schwingungen hervorrufen. Neben der Bildung und Ausbreitung von Rissen wird durch solche Schwingungen auch der Verschleiß an gegeneinander laufenden Komponenten wie Fahrwerkszylinder und Kolben begünstigt. Hubschrauber und Senkrechtstarter müssen zum Abheben und Landen zwar keine lange Distanzen auf dem Rollfeld zurücklegen, wodurch sich die Belastung deutlich verringert, dennoch führen auch hier die Relativbewegung zwischen bewegten Teilen zu Schwingungen, die vom Antrieb auf die gesamte Struktur übertragen werden, und zu einem ähnlich starken Verschleiß. Als Folge lokalen Verschleißes - etwa im Bereich von Dichtungsringen - entstehen Spalte, Verunreinigungen wie Staub der Umgebungsluft dringen ein und verstärken den Verschleißmechanismus an bewegten Teilen.

Spritzwasser, welches bei winterlichen Betriebsbedingungen zusätzlich mit gelösten Salzen versetzt ist, sowie Kondenswasser, das sich abhängig von der Flughöhe und der Luftfeuchtigkeit bildet, bieten die Grundlage für das Auftreten von Korrosionsangriff. Trotz des vergleichsweise sehr guten Eigenschutzes des Aluminiums durch die sich schnell bildende stabile Oxidschicht tritt der Korrosionsangriff gerade im Bereich von Schwachstellen wie Verschraubungen und Dichtungen besonders ausgeprägt auf, da hier meist eine gewisse Zugänglichkeit für etwaige Elektrolyten gegeben ist und eine einmal geschädigte Dichtung oder ein Dichtungssitz kaum noch wirksamen Schutz bietet. Es ist ferner bekannt, dass die dynamische Belastung eines Bauteils Korrosion begünstigt, insbesondere Formen wie Lochfraß oder Spannungsrisskorrosion.

Extreme dynamische Belastungen treten insbesondere auch bei Propellerblättern auf. Die Aufgabe von Propellern ist, die durch einen Motor erzeugte Rotationsenergie in Form von Strömungsenergie an das umgebende Medium abzugeben. Ihre Wirkungsweise beruht darauf, dass durch die Rotation eine bestimmte Luftmasse pro Zeiteinheit ergriffen und aus ihrer Ruhelage nach hinten beschleunigt abgestoßen wird. Die verschiedene Wölbung von Ober- und Unterseite sowie die Ausrichtung der einzelnen Flügel bewirken eine unterschiedlich starke Umlenkung und Beschleunigung des umgebenden Mediums z.B. Luft. Auf der stärker gewölbten Seite entsteht ein Sog, da hier das Medium einen längeren Weg zurücklegen muss und dementsprechend auf höhere Geschwindigkeiten beschleunigt wird, die Seite (der Bewegungsrichtung zugewandt) wird deshalb auch als Saugseite bezeichnet. Entsprechend bezeichnet man die Seite geringerer Umströmungsgeschwindigkeiten und höheren Drucks als Druckseite (der Bewegungsrichtung abgewandt). Der Druckgradient zwischen Saug- und Druckseite erzeugt an jedem Flügel dynamische Auftriebskräfte deren axial gerichteten Komponenten zusammen den Propeller und das damit verbundene Objekt vorwärts treiben. Die überlagerten Axialkräfte werden auch als Schub bezeichnet. Die höheren Strömungsgeschwindigkeiten der Luft auf der Saugseite des Propellerblattes erzeugen ebenso höhere Geschwindigkeiten der darin enthaltenen festen und flüssigen Stoffe wie etwa Staub, Sand und kleinere Steinchen oder auch Wassertröpfchen. Deren Aufprall auf die Blattoberfläche führt besonders im Bereich der Propellerblattvorderkante zu starken plastischen Verformungen (Kraterbildung) und ausgeprägtem Materialabtrag. Lokal starke Beschädigungen etwa durch aufgewirbeltes Material während der Start-/Landephase des Luftfahrzeugs können gerade bei diesen dynamisch hoch belasteten Komponenten als Kerbe für die Rissausbreitung wirken und ein plötzliches Versagen hervorrufen. Weitere Einflussgrößen auf den Materialabtrag sind die Betriebsbedingungen und damit verbunden die Anstellung des Blattes sowie der Einsatzort. Die extreme dynamische Beanspruchung und der fortwährend stattfindende Verschleiß durch Erosion werden meist überlagert von Korrosionsangriff, der ebenfalls von den Einsatzbedingungen abhängig ist, z.B. Betrieb unter winterlichen oder tropischen Bedingungen.

Die Strömungsmechanik eines Propellerblattes bestimmt die Höhe der Schubkraft des Triebwerks. Schubkraft entsteht aus der Beschleunigung einer Masse, weshalb Abweichungen von der Blattgeometrie im Auslegungspunkt nur in sehr begrenztem Maße tolerierbar sind. Im Rahmen der Blattüberholung wird daher eingehend geprüft, inwieweit die Ist-Geometrie des Blattes vom Soll-Wert abweicht und welche Schubeinbußen damit verbunden sind. Blätter, bei denen sich die Geometrie mit ihren Mindestabmessungen nicht mehr einstellen ließ, mussten daher bisher verschrottet werden.

Im Rahmen der Überholung von Fahrwerkskomponenten wird eingehend geprüft, wie stark die Schädigung durch Korrosion und mechanischen Verschleiß ausgeprägt ist und ob etwa ein Versagen des Bauteils im weiteren Einsatz zu befürchten ist. Reparaturmaßnahmen waren bisher nur sehr begrenzt möglich und reduzierten sich im Wesentlichen auf das Glätten von Dichtungssitzen, Führungen oder dergleichen durch Schleifen und Polieren gefolgt von einer Wiederherstellung des Korrosionsschutzes beispielsweise durch Eloxieren oder Chromatieren.

Während bei zahlreichen Anwendungen flächenhaft aufgebrachte Beschichtungen durch thermisches Spritzen (Hochgeschwindigkeits-Flammspritzen, Plasmaspritzen, Lichtbogenspritzen, Detonationsspritzen) in beachtlichem Maße dazu beitragen, die Lebensdauer von Bauteilen zu verlängern, sind diese Verfahren für Komponenten, die im Bereich der Luft- und Raumfahrttechnik zum Einsatz kommen, nur begrenzt einsetzbar. So sind diese Verfahren insbesondere aufgrund begrenzter Schichtdicke und Haftungsproblemen auf Aluminiumlegierungen nur eingeschränkt anwendbar.

Bei Prozessen des thermischen Spritzens wird der Spritzwerkstoff als Pulver oder Draht einer Energiequelle zugeführt und dort an- bzw. aufgeschmolzen. Die Bezeichnung des Spritzverfahrens richtet sich dabei nach dem jeweiligen Prozess, durch den die thermische Energie zum Aufschmelzen des Spritzwerkstoffs erzeugt wird. Bei den etablierten Verfahren geschieht dies durch Verbrennung eines Brennstoff-Sauerstoff-Gemisches, Zündung eines Lichtbogens oder Überführung eines Prozessgases in den plasmaförmigen Zustand. Das geschmolzene Material wird dann durch die expandierenden Verbrennungsgase oder auch durch Druckluft auf die Bauteiloberfläche hin beschleunigt.

Mit thermischen Spritzverfahren hergestellte Schichten enthalten Oxide und Poren, welche die Eigenschaften der Schichten unterschiedlich stark beeinträchtigen können. Bei Korrosionsschutzschichten aus Aluminium und Zink auf Stahl beispielsweise ist der Einfluss gering, da diese Schichten unedler sind als Stahl und deshalb die Schutzwirkung so lange gegeben ist, bis sich die anodisch wirkende Schicht aufgelöst hat. Kathodisch wirkende Schichten, beispielsweise Schichten aus Nickellegierungen auf Stahl müssen dagegen dicht sein, um einen Kontakt zwischen dem Grundwerkstoff und dem korrosiven Medium zu verhindern. Sie dürfen auch keine Oxide an den Grenzflächen der Partikel enthalten, die sich bei der Korrosion herauslösen und das Durchdringen des Mediums bis zum Grundwerkstoff ermöglichen. Physikalische Eigenschaften wie die elektrische Leitfähigkeit oder Wärmeleitfähigkeit werden ebenfalls durch Oxide und Poren beeinträchtigt.

Reparaturmethoden, die ein Aufschmelzen des Reparaturwerkstoffs oder gar des Grundwerkstoffs bedingen, wie etwa thermische Spritzverfahren (Hochgeschwindigkeits-Flammspritzen, Plasmaspritzen, Lichtbogenspritzen, Detonationsspritzen) sind zudem aus konstruktions- und fertigungstechnischer Hinsicht nur begrenzt anwendbar, da abhängig von der Bauteilform und Herstellungsgeschichte mit dem notwendigen Wärmeeintrag oft ein unzulässiger Verzug einhergeht. Von besonderer Bedeutung sind die nachteiligen Effekte werkstofftechnischer Hinsicht, da diese nicht immer unmittelbar zu erkennen sind und daher ein besonderes Gefährdungspotenzial für die Betriebssicherheit darstellen. So können thermisch aktivierte Prozesse wie Phasenumwandlungen, Legierungsbildung und Teilchenwachstum zu unabsehbaren Änderungen der Werkstoffeigenschaften z.B. Festigkeitsverlust und damit zum Versagen des gesamten Bauteils führen. Auch sind viele Luftfahrtmaterialien nicht oder nur unter großem Aufwand schweißbar, und solche Schweißungen immer mit einer Beeinflussung des Gefüge- und Spannungszustandes verbunden.

In besonders nachteiliger Weise jedoch werden die mechanischen Eigenschaften der Schichten beeinträchtigt. So ist hinlänglich bekannt, dass thermisch gespritzte Schichten eine im Vergleich zu Massivmaterial nur sehr geringe Dauerfestigkeit unter schwingender Beanspruchung aufweisen.

Weiterentwicklungen bei den Verfahren des thermischen Spritzens hatten daher das Ziel, den Oxidgehalt und Porenanteil der Schichten zu verringern. Ein großer Fortschritt war die Einführung des Vakuum-Plasmaspritzens und des Niederdruck-Plasmaspritzens, mit denen es gelang oxidarme Schichten auch aus sehr reaktiven Materialien herzustellen. Im Bereich der Luftfahrt und Kraftwerkstechnik werden beispielsweise dynamisch und thermisch hoch beanspruchte Turbinenschaufeln zum Schutz gegen Oxidation mit MCrAlY-Legierungen (M für Ni und/oder Co) beschichtet.

Das Kaltgasspritzen, wie es beispielsweise in US 5 302 414 und EP 0 484 533 beschrieben ist, stellt insofern einen bedeutenden Fortschritt auf dem Gebiet der Oberflächentechnik dar, da hierdurch oxidarme und besonders dichte metallische Schichten auch unter atmosphärischen Bedingungen hergestellt werden können. Obschon die mechano-physikalischen Schlüsseleigenschaften der Schichten wie Duktilität, Schwingfestigkeit und Leitfähigkeit bei diesem Verfahren besonders begünstigt werden, wurde Kaltgasspritzen im Falle der Beschichtung dynamisch hoch beanspruchter Komponenten wie etwa Turbinenschaufeln nur in Verbindung mit einer nachgeschalteten thermischen Behandlung der beschichteten Komponenten anwendet. So beschriebt die US 6 905 728 die Anwendung des Kaltgasspritzens für die Reparatur und Geometrie-Wiederherstellung von Hochdruckkomponenten im Bereich von stationären Gasturbinen, Turbinentriebwerken und Hilfstriebwerken. Wesentlicher Bestandteil der dort dargestellten Methode ist eine dem Beschichten durch Kaltgasspritzen nachgeschaltete thermische Behandlung des Bauteils z.B. durch Sintern. Diese Nachbehandlung ist zum Erreichen der geforderten mechanischen und physikalischen Schichteigenschaften zwingend erforderlich.

Heterogene Gefügezustände und Eigenschaftsverteilungen ließen sich in einigen Fällen prinzipiell zwar durch Wärmebehandlungen homogenisieren, sind aufgrund der Herstellungsart vieler Bauteile - etwa durch Schmiedeprozesse - nicht zulässig, oder aber wegen der Bauteilabmessungen nicht oder nur unter hohem Aufwand möglich. Am Beispiel aushärtbarer Aluminiumlegierungen lässt sich die Temperaturempfindlichkeit des Gefüges besonders gut darstellen. So tritt bei der Legierung AA2224 bereits ab etwa 190 °C der Alterungsprozess - d.h. ein signifikantes Wachstum der Ausscheidungsteilchen - ein. Im Fall der Legierung AA7075 beginnt dieser Prozess sogar bereits bei 120 °C.

Als Folge der vorstehend geschilderten Probleme wurden dynamisch beanspruchte Bauteile für luftfahrtechnische Anwendungen, bei denen der Verschleiß ein derart hohes Maß erreicht hat, dass die notwendige mechanische Stabilität nicht mehr erreicht wird, bisher unter hohem Kostenaufwand vollständig ersetzt.

Der vorliegenden Erfindung liegt die Aufgabe zugrunde, ein Verfahren zur Reparatur und Wiederherstellung von dynamisch beanspruchten Komponenten aus Aluminiumlegierungen für luftfahrtechnische Anwendungen zu schaffen, mit welchem sich auch Komponenten wiederherstellen lassen, deren Reparatur bisher mit herkömmlichen Verfahren technisch nicht möglich oder wirtschaftlich nicht sinnvoll war.

Diese Aufgabe wird erfindungsgemäß durch ein Verfahren zur Reparatur und Wiederherstellung von dynamisch beanspruchten Komponenten aus Aluminiumlegierungen für luftfahrtechnische Anwendungen gelöst, wie es in Anspruch 1 angegeben ist.

Im Zuge dieses Verfahrens
- wird der Grundwerkstoff ermittelt, aus dem die zu reparierende Komponente gefertigt wurde,
- wird die zu reparierende Komponente, falls erforderlich, einer Vorbearbeitung unterzogen,
- wird ein Spritzwerkstoff ausgewählt, der vergleichbare chemische, physikalische und mechanische Eigenschaften wie der Grundwerkstoff hat,
- werden für das anschließende Beschichtungsverfahren Beschichtungsparameter derart gewählt, das die Bindung innerhalb der aufzubringenden Schicht optimiert wird,
- wird der Spritzwerkstoff mittels Kaltgasspritzen auf die zu reparierende Komponente aufgebracht, um infolge Verschleiß und Vorbearbeitung abgetragenes Material zu ersetzen, und
- wird die beschichtete Komponente derart nachbearbeitet, dass die ursprüngliche Bauteilgeometrie wiederhergestellt wird,

Dieses Verfahren bietet den besonderen Vorteil, dass auch Komponenten, die bisher hätten ersetzt werden müssen, für den Einsatz im Luftfahrzeug wiederhergestellt werden können. So können z.B. auch Propellerblätter, bei denen bisher das Einschleifen einer Kontur mit zulässiger Maßabweichung nicht mehr möglich oder unterschritten war, für den Einsatz im Luftfahrzeug wiederhergestellt werden. Mit dem hier vorgeschlagenen Verfahren werden die geforderten Materialeigenschaften gerade in Bezug auf die Dauerschwingfestigkeit erreicht, ohne dass hierfür zusätzliche Verfahrensschritte wie etwa Sintern erforderlich wären.

Erfindungsgemäß wird dies erreicht durch Abstimmung des Spritzwerkstoffs auf das zu beschichtende Grundmaterial hinsichtlich dessen chemischer Zusammensetzung sowie durch Abstimmung der Beschichtungsparameter, wie z.B. Pulverpartikelgrößenverteilung, Prozessparameter, Düsengeometrie etc. derart, dass eine bestmögliche Bindung innerhalb der Schicht erreicht wird. Als Merkmal für die Qualität der Bindung wird vorzugsweise die in Dauerschwingversuchen ermittelte Dauerfestigkeit der Schicht herangezogen. Die so hergestellten Schichten erreichen nachweislich die Dauerfestigkeit des Grundwerkstoffs.

Bevorzugte Ausgestaltungen der Erfindung ergeben sich aus den Unteransprüchen.

Vorzugsweise wird in einem reinigenden Arbeitsschritt die zu reparierende Komponente mittels Reinigungsprozessen von Lackschutzschichten und löslichen Verunreinigungen befreit. Insbesondere wenn es sich bei der zu reparierenden Komponente um ein Propellerblatt handelt, kann hierzu ein ausgehärtetes Urea-Formaldehyd-Harz in Granulatform verwendet werden, mit dem lösliche Verunreinigungen sowie Lackierungs- und/oder Washprimerreste restlos von der zu reparierenden Komponente entfernt werden. Im Gegensatz zu einer chemischen Entlackung sind hierbei neben Aluminium keine Anteile von Sauerstoff, Zink, Phosphor und Chrom nachzuweisen.

Vorzugsweise werden verschlissene und/oder korrodierte Flächen soweit abgetragen, dass keine Verschleiß- und Korrosionsspuren mehr sichtbar sind. Für den Materialabtrag können mechanische Bearbeitungsprozesse wie beispielsweise Fräsen, Drehen oder Bohren, Funkenerosion, elektrochemische Verfahren oder Verdampfung angewendet werden. In bevorzugter Weise erfolgt die Bearbeitung durch Span abhebende Prozesse wie Drehen oder Fräsen lokal nur im Bereich des jeweiligen Angriffs, besonders bevorzugt erfolgt die Bearbeitung durch Schleifen. Wird das hier vorgeschlagene Verfahren zur Reparatur eines Propellerblatts angewendet, so erfolgt der Materialabtrag der verschlissenen und/oder korrodierten Flächen vorzugsweise bis zu einer Tiefe von 0,1 bis 0,8 mm. Der Materialabtrag kann aber auch so erfolgen, dass eine konstruktionsbedingte Mindestdicke an Restmaterial gewährleistet ist, aber äußere Beschädigungen sichtbar bleiben. Hierzu werden die verschlissenen und/oder korrodierten Flächen bis zu einer Tiefe von vorzugsweise 0,1 bis 0,5 mm abgetragen.

Das infolge Verschleiß und Bearbeitung abgetragene Material wird durch Kaltgasspritzen vorzugsweise eines Werkstoffs gleicher oder ähnlicher Zusammensetzung mit gleichen oder ähnlichen chemischen, physikalischen und mechanischen Eigenschaften wieder aufgetragen. Die Dicke der aufgespritzten Schicht erreicht dabei mindestens einen Wert, der dem der größten Verschleißtiefe an der jeweiligen Funktionsfläche entspricht zuzüglich eines Aufmaßes für die nachfolgende Bearbeitung. In bevorzugter Weise wird die Schicht auf der gesamten Funktionsfläche mit der gleichen Dicke aufgetragen. In besonders bevorzugter Ausführung wird die Schichtdicke der lokal variierenden Verschleißtiefe angepasst.

Im Gegensatz zu anderen beschichtungstechnischen Anwendungen ist bei dynamisch beanspruchten Luftfahrtkomponenten aus Aluminiumlegierungen eine Aktivierung der Bauteiloberfläche durch Korundstrahlen in der Regel nicht zulässig, da nicht ausgeschlossen werden kann, dass scharfkantige Korundpartikel Schädigungen in der Substratoberfläche hervorrufen oder auch als Einschluss dort haften bleiben und so als Keim für eine spätere Rissausbreitung wirken.

Im Beschichtungsprozess werden die Pulverpartikel in einer Spritzpistole kontinuierlich in ein komprimiertes und verbrennungsfrei erhitztes Gas injiziert. Durch anschließende Entspannung des Gas-/Partikelgemisches in einer de Laval'schen Düse erreicht dieses - je nach Gasart und Düsengeometrie - mitunter mehrfache Schallgeschwindigkeit. Die Pulverpartikel erreichen ihrerseits derart hohe Geschwindigkeiten, dass bereits die Umwandlung der kinetischen Energie in Wärme und Verformungsarbeit ausreicht, um im Moment des Aufpralls auf das zu beschichtende Bauteil eine Haftung zu erwirken. Grundlage dafür ist ein plastisches Fließen des Materials im Bereich der Partikel-Partikel/Partikel-Substrat-Grenzflächen als Folge des Auftretens adiabater Scherinstabilitäten. Das Vorheizen des Gases soll dessen Schallgeschwindigkeit und damit auch die Absolutgeschwindigkeit der Gas/Partikel-Strömung erhöhen. Außerdem werden die Partikel bereits während des kurzen Aufenthaltes im heißen Strömungsabschnitt erwärmt, wodurch sich wiederum ihre Verformungsfähigkeit beim Aufprall verbessert. Die Gastemperatur am Ort der Injektion liegt aber in jedem Fall unter der Schmelztemperatur des Beschichtungswerkstoffs, so dass ein An- oder Aufschmelzen der Partikel in der Flugphase nicht stattfindet. Nachteile wie Oxidation, thermisch aktivierte Phasenumwandlungen oder Legierungsbildung, wie sie von anderen thermischen Spritzprozessen bekannt sind, lassen sich beim Kaltgasspritzen fast vollständig vermeiden.

Im Anschluss an das Beschichten wird die zu reparierende Komponente vorzugsweise durch mechanische Bearbeitungsprozesse wie etwa Fräsen, Drehen oder Bohren bearbeitet, um die ursprüngliche Geometrie wiederherzustellen. In besonderer Ausführung erfolgt die Bearbeitung durch Funkenerosion, elektrochemische Verfahren oder Verdampfung.

Nachdem die ursprüngliche Bauteilgeometrie der beschichteten Komponente wiederhergestellt wurde, können die Funktionsflächen der Komponente hinsichtlich ihrer Form und Oberflächenstruktur endbearbeitet werden. Die Bearbeitung der Funktionsflächen kann insbesondere durch Prozesse wie Schleifen, Honen, Läppen und Polieren erfolgen, wodurch die Form und Funktion eines Neuteils innerhalb der tolerierten Grenzen erreicht werden kann.

Beim Schleifen oder Schmirgeln von Aluminium-Flächen kann es zum Eindrücken von Aluminium-Partikeln in die Oberfläche kommen. Aus diesem Grund ist die stetige Zufuhr von frischen Schleifzusatzstoffen bei gleichzeitiger Abfuhr des abgetragenen Werkstoffs dringend notwendig. Gute Ergebnisse wurden beispielsweise bei der Reparatur eines Propellerblattes dadurch erzielt, dass mit einer Fieberscheibe und grober Körnung (z.B. Körnung 40) mit einer handelsüblichen Handschleifmaschine ein Vorschleifen erfolgte, bei welchem die spritzraue Oberfläche bis zu 0,2 bis 0,6 mm geglättet wurde. In bevorzugter Weise wurde hierbei bereits im zweiten Schritt die Geometrie des Propellerblattes wiederhergestellt. Die Überprüfung hinsichtlich Form und Geometrie erfolgte dabei über vorgegebene Formprofilschablonen. Mittels Fächerschleifer wurde die Oberfläche unter Verwendung einer Körnung von 150 und dann im Feinschliff durch Schwingschleifen mit einer Körnung zwischen 120 bis 240 auf 0,1 bis 0,2 mm geglättet. Nach der Fertigstellung des Profils wurde die Oberfläche mit handelsüblichen Polierscheiben derart bearbeitet, dass eine spiegelnde Oberfläche entstand, um so den Reibungswiderstand des Luftstroms auf ein Minimum zu begrenzen.

Das Reparaturverfahren kann mit einer Versiegelung der bearbeiteten Oberflächen abgeschlossen werden, wobei hierzu die bearbeiteten Oberflächen lackiert, eloxiert oder chromatiert werden können. Vor dem eloxalen Oberflächenschutz sollte jedoch eine Rissprüfung vorzugsweise nach ASTM E 1417-99 stattfinden, wobei sich hier Type I (fluoreszierend), Methode A (wasserabwaschbar), Form a (Trockenpulver) als besonders vorteilhaft erwiesen hat. Diese zerstörungsfreie Prüfung dient zum Nachweis von Unregelmäßigkeiten wie Bindefehlern, Rissen, Überlappungen und Poren.

Die Verfahrensweise zur Erzeugung des anodischen Oberflächenschutzes (Eloxal) richtet sich nach dem Werkstoff im speziellen Anwendungsfall. Durch anodische Oxidation in Chrom- oder Schwefelsäure wird die Dicke der sich unter atmosphärischen Bedingungen ausbildenden Oxidhaut an Aluminiumbauteilen auf das 1000-fache gesteigert, wodurch sich der Korrosionsschutz aber auch die Verschleißbeständigkeit erheblich verbessern. Die Behandlung ist anwendbar bei einem Großteil der handelsüblichen Aluminiumlegierungen.

In bevorzugter Weise wird die Oberflächenbehandlung in Chromsäure durchgeführt und dabei eine Schicht von 1 bis 5 µm Dicke erzeugt, die zwar dünner ist als bei Verwendung von Schwefelssäure jedoch eine höhere Elastizität besitzt. In besonders bevorzugter Weise wird eine Schichtdicke von 3 bis 4 µm eingestellt, jedoch auf die anschließende Verdichtung verzichtet, da auf unverdichteten Schichten eine bessere Lackhaftung erzielt wird.

Bei den vorstehend erläuterten Reparaturverfahren ist zum Erreichen der geforderten mechanischen Eigenschaften eine thermische Nachbehandlung des beschichteten Bauteils, wie sie in der US 6 905 728 dargelegt ist, nicht nötig.

Obschon das hier vorgeschlagene Verfahren vorstehend insbesondere in Verbindung mit der Reparatur von Propellerblättern oder Fahrwerkskomponenten beschrieben wurde, versteht sich, dass dieses Verfahren sich selbstverständlich auch zur Reparatur anderer dynamisch stark beanspruchter Bauteile von Luftfahrzeugen anwenden lässt.

## Patentansprüche

1. Verfahren zur Reparatur und Wiederherstellung von dynamisch beanspruchten Komponenten aus Aluminiumlegierungen für luftfahrtechnische Anwendungen, **dadurch gekennzeichnet dass**,
(a) der Grundwerkstoff ermittelt wird, aus dem die zu reparierende Komponente gefertigt wurde,
(b) die zu reparierende Komponente, falls erforderlich, einer Vorbearbeitung unterzogen wird,
(c) ein Spritzwerkstoff ausgewählt wird, der vergleichbare chemische, physikalische und mechanische Eigenschaften wie der Grundwerkstoff hat,
(d) für das anschließende Beschichtungsverfahren Beschichtungsparameter derart gewählt werden, das die Bindung innerhalb der aufzubringenden Schicht optimiert wird,
(e) der Spritzwerkstoff mittels Kaltgasspritzen auf die zu reparierende Komponente aufgebracht wird, um infolge Verschleiß und Vorbearbeitung abgetragenes Material zu ersetzen, und
(f) die beschichtete Komponente derart nachbearbeitet wird, dass die ursprüngliche Bauteilgeometrie wiederhergestellt wird,

2. Verfahren nach Anspruch 1, **dadurch gekennzeichnet, dass** im Zuge von Schritt (b) die zu reparierende Komponente mittels Reinigungsprozessen von Lackschutzschichten und löslichen Verunreinigungen befreit wird,

3. Verfahren nach einem der vorhergehenden Ansprüche, **dadurch gekennzeichnet, dass** im Zuge von Schritt (b) verschlissene und/oder korrodierte Flächen soweit abgetragen werden, dass keine Verschleiß- und Korrosionsspuren mehr sichtbar sind.

4. Verfahren nach einem der vorhergehenden Ansprüche, **dadurch gekennzeichnet, dass** im Anschluss an Schritt (f) Funktionsflächen der Komponente hinsichtlich Form und Oberflächenstruktur endbearbeitet werden,

5. Verfahren nach einem der vorhergehenden Ansprüche, **dadurch gekennzeichnet, dass** eine abschließende Versiegelung der bearbeiteten Oberflächen erfolgt.

6. Verfahren nach Anspruch 5, **dadurch gekennzeichnet, dass** die bearbeiteten Oberflächen lackiert, eloxiert oder chromatiert werden.

7. Verfahren nach Anspruch 6 **dadurch gekennzeichnet, dass** die wiederhergestellte Oberfläche einer anodischen Oxidation unterzogen wird.

8. Verfahren nach Anspruch 7 **dadurch gekennzeichnet, dass** die anodische Oxidation in Chrom- oder Schwefelsäure erfolgt.

9. Verfahren nach Anspruch 7 oder 8 **dadurch gekennzeichnet, dass** die anodische Oxidation durchgeführt wird, bis sich eine Oxidhaut mit einer Dicke von 1 bis 5 µm, vorzugsweise von 3 bis 4 µm, ergibt.

10. Verfahren nach einem der vorhergehenden Ansprüche, **dadurch gekennzeichnet, dass** zur Vor- und/oder Endbearbeitung elektrochemische Bearbeitungsprozesse, Funkenerosions- oder Laserprozesse angewendet werden.

11. Verfahren nach einem der vorhergehenden Ansprüche, **dadurch gekennzeichnet, dass** im Zuge von Schritt (e) der Werkstoff gleichmäßig auf die gesamte betroffene Fläche aufgetragen wird, mindestens in einer Dicke, die der größten Verschleißtiefe auf dieser Fläche entspricht.

12. Verfahren nach einem der Ansprüche 1 bis 10, **dadurch gekennzeichnet, dass** im Zuge von Schritt (e) der Werkstoff in einer Schichtdicke auf die betroffene Fläche aufgetragen wird, die der lokal variierenden Verschleißtiefe entspricht.

13. Verfahren nach einem der vorhergehenden Ansprüche, **dadurch gekennzeichnet, dass** der aufgespritzte Werkstoff im Wesentlichen die gleiche Zusammensetzung hat wie der Grundwerkstoff.

14. Verfahren nach einem der Ansprüche 1 bis 12, **dadurch gekennzeichnet, dass** der aufgespritzte Werkstoff eine von Grundwerkstoff abweichende Zusammensetzung hat, jedoch vergleichbare chemische, physikalische und mechanische Eigenschaften.

15. Verfahren nach einem der vorhergehenden Ansprüche, **dadurch gekennzeichnet, dass** das Bauteil vor dem Beschichten keine mechanische Aktivierung etwa durch Korundstrahlen erfährt.

16. Verfahren einem der vorhergehenden Ansprüche, **dadurch gekennzeichnet dass** nach dem Schritt (f) zusätzlich eine Schicht mit Schutzfunktion gegen Verschleiß, Korrosion oder andere schädigende Einflüsse auf die Komponente aufgebracht wird.

17. Verfahren nach Anspruch 16 **dadurch gekennzeichnet, dass** die Beschichtung zum Schutz gegen Verschleiß, Korrosion oder andere schädigende Einflüsse mittels thermischer und galvanischer Beschichtungsverfahren aufgebracht wird.

18. Verfahren einem der vorhergehenden Ansprüche, **dadurch gekennzeichnet, dass** im Zuge von Schritt (d) als Merkmal für die Qualität der Bindung die in Dauerschwingversuchen ermittelte Dauerfestigkeit der Schicht herangezogen wird.

19. Verfahren einem der vorhergehenden Ansprüche, **dadurch gekennzeichnet, dass** es sich bei der zu reparierenden Komponente um eine Fahrwerkskomponente handelt.

20. Verfahren einem der vorhergehenden Ansprüche, **dadurch gekennzeichnet, dass** es sich bei der zu reparierenden Komponente um ein Propellerblatt handelt.

21. Verfahren nach Anspruch 21 **dadurch gekennzeichnet, dass** im Zuge von Schritt (b) ein Urea-Formaldehyd-Harz in Granulatform eingesetzt wird, um lösliche Verunreinigungen sowie Lackierungs- und/oder Washprimerreste von der zu reparierenden Komponente zu entfernen.

22. Verfahren nach Anspruch 20 oder 21, **dadurch gekennzeichnet, dass** im Zuge von Schritt (b) die verschlissenen und/oder korrodierten Flächen bis zu einer Tiefe von 0,1 bis 0,8 mm abgetragen werden.

23. Verfahren nach Anspruch 21, **dadurch gekennzeichnet, dass** im Zuge vorn Schritt (e) ein Großteil der Saug- bzw. Druckseite des Propellerblattes beschichtet wird.
